# EUROPEAN PATENT APPLICATION

(11) **EP 4 560 553 A1**
(43) Date of publication of application: **28.05.2025**
(21) Application number: 24214949.0
(22) Date of filing: 22.11.2024
(51) Int. Cl.: G06Q 10/20, B64F 5/60, F01D 21/00, F02C 9/00, H04L 67/12, G01M 15/14

(54) **MANAGEMENT OF AIRCRAFT SYSTEM COMPONENTS ACROSS DIFFERENT AIRCRAFT ENGINES**

(30) Priority: 24.11.2023 US 202318518781
(71) Applicant: Pratt & Whitney Canada Corp., (01BE5) Longueuil, QC J4G 1A1 (CA)
(72) Inventor: VARENNES, Louis Brillon, (01BE5) Longueuil, J4G 1A1 (CA); SHI, Songyue, (01BE5) Longueuil, J4G 1A1 (CA)
(74) Representative: Dehns

(57) **Abstract**

A method is provided for component management. During this method, a first output signal is received from a first aircraft system (20A) at a component management system (22). The first aircraft system (20A) includes a first engine (26A) and a first component (24A) installed in the first engine (26A). The first output signal communicates identification data for the first engine (26A) and a first operating parameter for the first engine (26A). A first component parameter for the first component (24A) is determined based on the identification data for the first engine (26A) and the first operating parameter for the first engine (26A). A record for the first component (24A) is updated in the component management system (22) using the first component parameter for the first component (24A).

## Description

### TECHNICAL FIELD

This disclosure relates generally to aircraft systems and, more particularly, to management of aircraft system components.

### BACKGROUND INFORMATION

Various systems and methods are known in the art for managing aircraft system components. While these known component management systems and methods have various benefits, there is still room in the art for improvement.

### SUMMARY

According to an aspect of the present invention, a method is provided for component management. During this method, a first output signal is received from a first aircraft system at a component management system. The first aircraft system includes a first engine and a first component installed in the first engine. The first output signal communicates identification data for the first engine and a first operating parameter for the first engine. A first component parameter for the first component is determined based on the identification data for the first engine and the first operating parameter for the first engine. A record for the first component is updated in the component management system using the first component parameter for the first component.

In an embodiment of the above, the component management system may be configured as or otherwise include a cloud-based server.

In an embodiment according to any of the previous embodiments, the identification data for the first engine may be indicative of a model of the first engine.

In an embodiment according to any of the previous embodiments, the identification data for the first engine may be indicative of an identification number of the first engine.

In an embodiment according to any of the previous embodiments, the first operating parameter for the first engine may be indicative of a period of time of operation of the first engine. The first component parameter for the first component may be indicative of a period of time of operation of the first component corrected based on the identification data for the first engine.

In an embodiment according to any of the previous embodiments, the first operating parameter for the first engine may be indicative of a number of operating cycles of the first engine. The first component parameter for the first component may be indicative of a number of operating cycles of the first component corrected based on the identification data for the first engine.

In an embodiment according to any of the previous embodiments, the method may also include determining a first correction factor based on the identification data for the first engine. The determining of the first component parameter for the first component may include modifying an uncorrected first component parameter, obtained using the first operating parameter for the first engine, based on the first correction factor to provide the first component parameter for the first component.

In an embodiment according to any of the previous embodiments, the method may also include: receiving a second output signal from a second aircraft system at the component management system, the second aircraft system including a second engine and the first component where the first component was removed from the first engine following the receiving of the first output signal and installed in the second engine, and the second output signal communicating identification data for the second engine and a second operating parameter for the second engine; determining a second correction factor based on the identification data for the second engine; modifying an uncorrected second component parameter, obtained using the second operating parameter for the second engine, based on the second correction factor to provide a second component parameter for the first component; and updating the record for the first component in the component management system using the second component parameter for the first component.

In an embodiment according to any of the previous embodiments, the second engine may be a different model of engine than the first engine. The second correction factor may be different than the first correction factor.

In an embodiment according to any of the previous embodiments, one of the first engine or the second engine may be configured as or otherwise include a turbofan engine. The other one of the first engine or the second engine may be configured as or otherwise include a turboprop engine.

In an embodiment according to any of the previous embodiments, one of the first engine or the second engine may be configured as or otherwise include a turbofan engine. The other one of the first engine or the second engine may be configured as or otherwise include a turboshaft engine.

In an embodiment according to any of the previous embodiments, one of the first engine or the second engine may be configured as or otherwise include a turboprop engine. The other one of the first engine or the second engine may be configured as or otherwise include a turboshaft engine.

In an embodiment according to any of the previous embodiments, one of the first aircraft system or the second aircraft system may be configured as or otherwise include an aircraft propulsion system. The other one of the first aircraft system or the second aircraft system may be configured as or otherwise include an aircraft electrical power system.

In an embodiment according to any of the previous embodiments, the record for the first component in the component management system may account for operation of the first component in the first engine and the second engine.

In an embodiment according to any of the previous embodiments, the method may also include: receiving a second output signal from a second aircraft system at the component management system, the second aircraft system including a second engine and a second component installed in the second engine, and the second output signal communicating identification data for the second engine and a second operating parameter for the second engine; determining a second component parameter for the second component based on the identification data for the second engine and the second operating parameter for the second engine; and updating a record for the second component in the component management system using the second component parameter for the second component.

In an embodiment according to any of the previous embodiments, the method may also include: determining a first correction factor based on the identification data for the first engine, wherein the determining of the first component parameter for the first component comprises processing the first operating parameter for the first engine and the first correction factor to provide the first component parameter for the first component; and determining a second correction factor based on the identification data for the second engine, wherein the determining of the second component parameter for the second component comprises processing the second operating parameter for the second engine and the second correction factor to provide the second component parameter for the second component.

In an embodiment according to any of the previous embodiments, the second engine may be a different model of engine than the first engine. The second correction factor may be different than the first correction factor.

In an embodiment according to any of the previous embodiments, the first component and the second component may be a common model of component.

In an embodiment according to any of the previous embodiments, the first component may be a fuel nozzle.

According to another aspect of the present invention, another method is provided for component management. During this method, a first output signal is received from a propulsion system of an aircraft at a component management system located remote from the aircraft. The first aircraft system includes a first engine and a first component. The first output signal is indicative of a first operating parameter for the first engine. A first correction factor is determined based on an identity of the first engine. Information, determined using the first operating parameter for the first engine, is modified based on the first correction factor to provide a first component parameter for the first component. A history of the first component in the component management system is updated based on the first component parameter for the first component.

According to still another aspect of the present invention, another method is provided for component management. During this method, a first component parameter is determined for a first component installed in a first aircraft engine. A record for the first component in a component management system is updated using the first component parameter for the first component. A second component parameter for the first component installed in a second aircraft engine is determined, where the first component was removed from the first engine following the determination of the first component parameter and subsequently installed in the second engine. The second aircraft engine has a different configuration than the first aircraft engine. The second component parameter and the first component parameter are of a common parameter type. The record for the first component is updated in the component management system using the second component parameter for the first component.

In an embodiment of the above, the second aircraft engine may be a different type of gas turbine engine than the first aircraft engine.

In an embodiment according to any of the previous embodiments, the component management system may be configured as or otherwise include a cloud-based server located remote from the first aircraft engine and the second aircraft engine.

In an embodiment according to any of the previous embodiments, the first component parameter for the first component may be determined using a first correction factor. The second component parameter for the first component may be determined using a second correction factor that is different than the first correction factor.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a plurality of aircraft systems and a plurality of remote computers in signal communication with a component management system.
FIGS. 2A-C are schematic illustrations of an aircraft system with various different aircraft engine arrangements.
FIG. 3 is a flow diagram of a method for component management.
FIG. 4A is a schematic illustration of a first aircraft system in signal communication with the component management system, where a first engine component is installed in the first aircraft system.
FIG. 4B is a schematic illustration of a second aircraft system in signal communication with the component management system, where the first engine component is installed in the second aircraft system.

### DETAILED DESCRIPTION

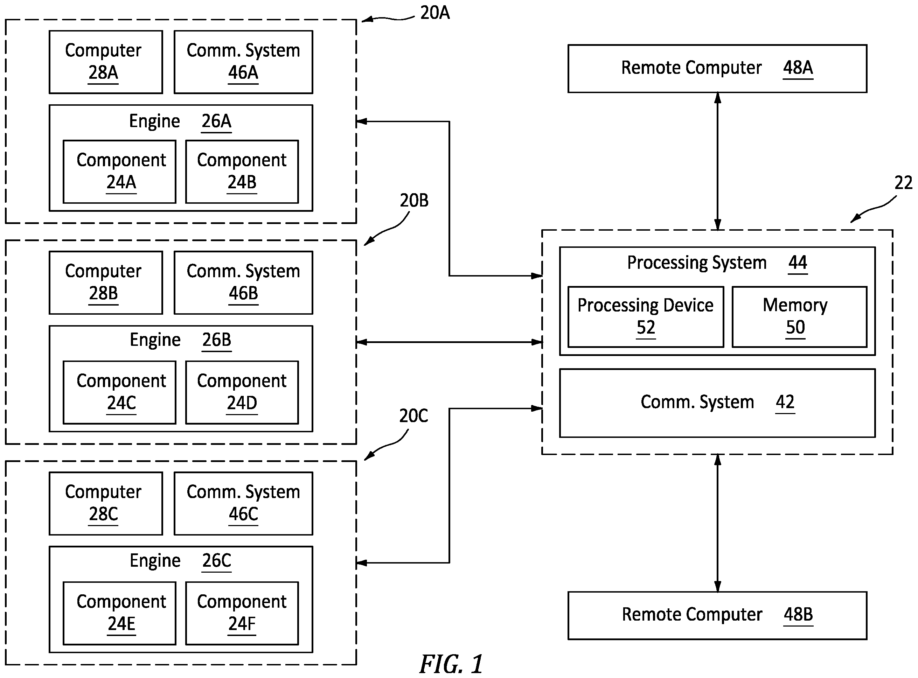

FIG. 1 illustrates a plurality of aircraft systems 20A-C (generally referred to as "20") in signal communication with a system 22 for managing a group of aircraft engine components 24A-F (generally referred to as "24"). Each of these aircraft systems 20 may be configured as an aircraft propulsion system. Alternatively, one or more or all of the aircraft systems 20 may each be configured as an aircraft electrical power system. For ease of description, each aircraft system 20 is described below as being arranged with a different aircraft. It is contemplated, however, some or all of the aircraft systems 20 may alternatively be arranged with a common (the same) aircraft. Each aircraft system 20A, 20B, 20C of FIG. 1 includes an aircraft engine 26A, 26B, 26C (generally referred to as "26") and an onboard computer 28A, 28B, 28C (generally referred to as "28") servicing the respective aircraft engine 26A, 26B, 26C.

Each aircraft engine 26 may be configured as or otherwise include a gas turbine engine, or another type of internal combustion (IC) engine. At least one of the aircraft engines 26 may have a different configuration than another one of the aircraft engines 26. The aircraft engines 26 of FIG. 1, for example, are described below as being all different types (e.g., models) of aircraft engines for ease of description. It is contemplated, however, some of the aircraft engines 26 may alternatively be a common type (e.g., model) of aircraft engine.

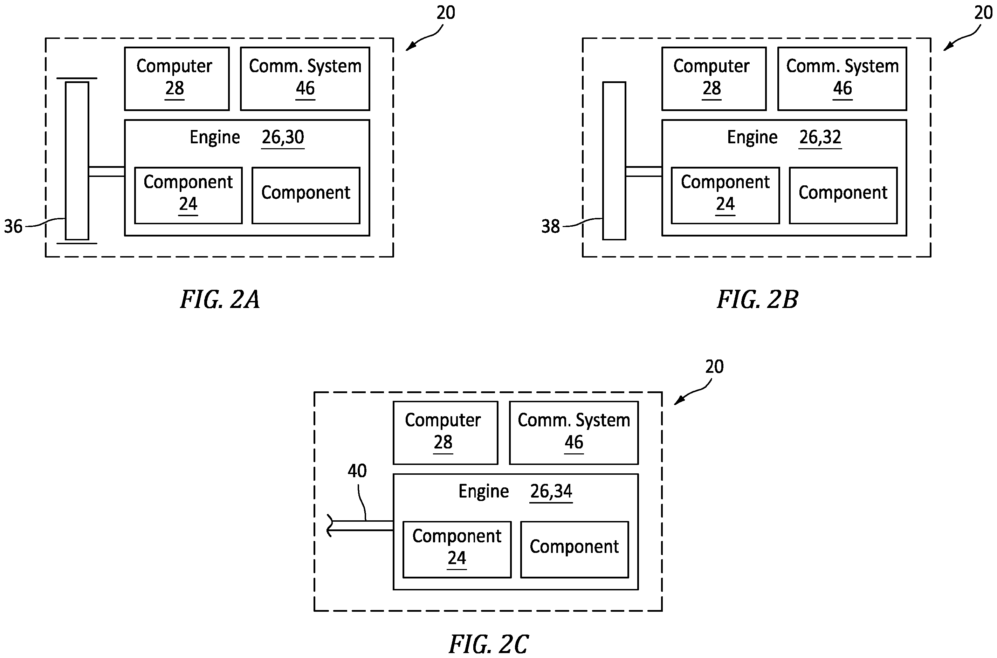

The first aircraft engine 26A may be a first model of aircraft engine. The second aircraft engine 26B may be a second model of aircraft engine which is different than the first model. The third aircraft engine 26B may be a third model of aircraft engine which is different than the first model and the second model. Examples of different aircraft engine models include, but are not limited to, a turbofan engine 30 (e.g., see FIG. 2A), a turboprop engine 32 (e.g., see FIG. 2B) and a turboshaft engine 34 (e.g., see FIG. 2C). The turbofan engine 30 of FIG. 2A includes and drives rotation of a fan rotor 36. The turboprop engine 32 of FIG. 2B includes and drives rotation of a propeller rotor 38. The turboshaft engine 34 of FIG. 2C includes and drives rotation of an output shaft 40, where the output shaft 40 may be coupled to and configured to drive rotation of an air mover (e.g., a rotorcraft rotor), a rotor of an electric generator or another mechanical load. Referring again to FIG. 1, in addition to powering different types of mechanical loads, the aircraft engines 26 may also be configured with different engine core arrangements (e.g., numbers of compressor and/or turbine stages, sections, etc.) and/or different power ratings. Alternatively, the different model aircraft engines 26 may power a common type of mechanical load, where those aircraft engines 26 are configured with different engine core arrangements and/or different power ratings. Of course, various other variations between the aircraft engines 26 are possible and contemplated by the present disclosure.

The onboard computer 28 is configured to monitor operation of the respective aircraft engine 26. The onboard computer 28, for example, may monitor one or more operating parameters of the respective aircraft engine 26 using one or more engine sensor output(s) and/or one or more computer model(s). Examples of the engine operating parameters include a period of aircraft engine operating time (e.g., engine hours), a period of aircraft flight time (e.g., flight hours), and a number of aircraft engine operating cycles. Other examples of the engine operating parameters include, but are not limited to, a temperature, a pressure and/or a flowrate of a fluid (e.g., core air, fuel, etc.) within the respective aircraft engine 26. The onboard computer 28 may also be configured to control operation of the respective aircraft engine 26. Examples of the onboard computer 28 include, but are not limited to, a full authority digital engine control (FADEC), an electronic engine controller (EEC), an engine control unit (ECU) and a full flight data acquisition, storage and transmission (FAST) system.

The engine components 24 of FIG. 1 are respectively installed in the aircraft engines 26, where each aircraft engine 26 includes one or more of the engine components 24. These engine components 24 may be of a common type of aircraft engine component. All of the engine components 24 within the group, for example, may be a common model of aircraft engine component. The engine components 24 therefore may be interchangeable between the various different model aircraft engines 26. This interchangeability may reduce costs associated with designing and manufacturing the various different model aircraft engines 26. Moreover, the interchangeability may reduce engine downtime. For example, an inoperable engine component 24 in one of the aircraft engines 26 may be replaced by an operable engine component 24 from another one of the aircraft engines 26 while that aircraft engine 26 is otherwise already out of service; e.g., being overhauled, serviced, inspected, stored as a spare engine, etc. However, each engine component 24 within the group may be associated with a unique identification number. Each engine component 24, for example, may be assigned a different serial number. Using the unique identification numbers, the component management system 22 may track information associated with each individual engine component 24 within the group even where that engine component 24 has been installed with multiple different aircraft engines 26 as described below in further detail.

Each engine component 24 may be configured as a single engine part. Alternatively, each engine component 24 may be configured as an assembly of engine parts; e.g., an engine sub-assembly, an engine module, an engine section, or the like. For ease of description, the engine components 24 are described below as fuel nozzles. The present disclosure, however, is not limited to such an exemplary type of engine component. Each engine component 24, for example, may alternatively be a rotor blade, a rotor disk, a flowpath wall, a gear system, a seal, a bearing, a shaft, a pump, a control system component, or any other life-limit part or non-life-limited part of an aircraft engine. Examples of the rotor blade include a compressor blade, a turbine blade and a propulsor blade; e.g., a fan blade, a propeller blade, etc. Examples of the rotor disk include a compressor disk and a turbine disk. Examples of the flowpath wall include a combustor wall, a duct wall and a shroud (e.g., a blade outer air seal (BOAS)). Examples of the gear system include a transmission, an epicyclic gear system and a gearbox.

The component management system 22 is located remote from each of the aircraft systems 20 and their aircraft engines 26. The component management system 22, for example, may be arranged at a stationary ground location. The component management system 22 may be configured as a cloud-based server or another type of computer. The component management system 22 of FIG. 1, for example, includes a communication system 42 and a processing system 44.

The communication system 42 is configured to facilitate signal communication (e.g., hardwired and/or wirelessly coupling) between the component management system 22 and one or more of the aircraft that include the aircraft systems 20. More particularly, the communication system 42 is configured to facilitate signal communication between the processing system 44 and each onboard computer 28 through, for example, a communication system 46A, 46B, 46C (generally referred to as "46") onboard the respective aircraft. With this arrangement, the communication between the processing system 44 and each onboard computer 28 may take place while the aircraft is stationary and on ground (e.g., parked at an airport terminal, in a maintenance hangar, etc.) and/or while the aircraft is inflight. The communication system 42 may also be configured to facilitate signal communication between the component management system 22 and one or more other remote computers 48A and 48B; e.g., a computer at an overhaul and/or maintenance facility, a computer at a manufacturer of the aircraft engines 26, a computer at an airline operating the aircraft, etc. The communication system 42 of FIG. 1, for example, includes a signal receiver and a signal transmitter (or a signal transceiver) coupled to the processing system 44.

The processing system 44 may be implemented with a combination of hardware and software. The hardware may include memory 50 and at least one processing device 52, which processing device 52 may include one or more single-core and/or multi-core processors. The hardware may also or alternatively include analog and/or digital circuitry other than that described above.

The memory 50 is configured to store software (e.g., program instructions) for execution by the processing device 52, which software execution may control and/or facilitate performance of one or more operations such as those described below. The memory 50 may be a non-transitory computer readable medium. For example, the memory 50 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

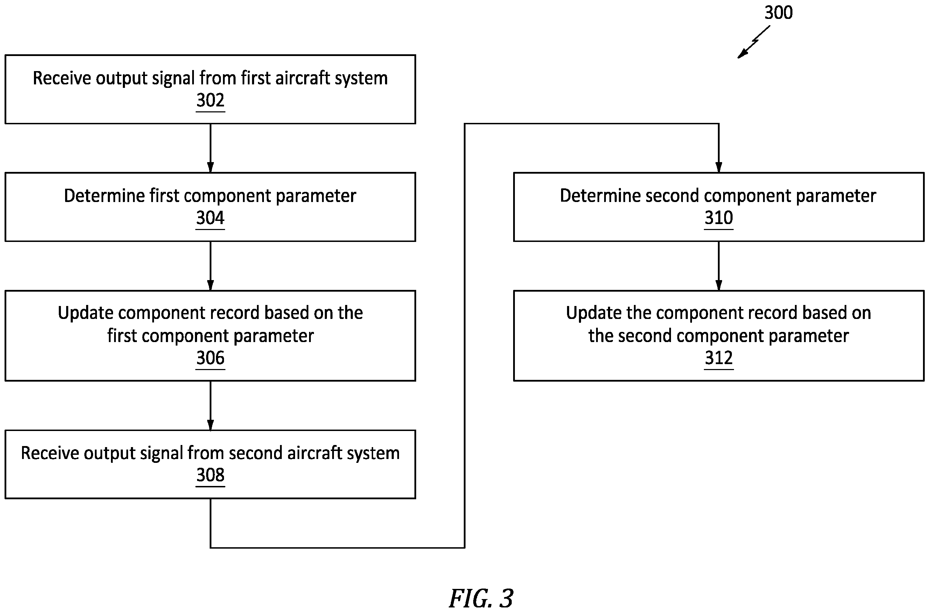

FIG. 3 is a flow diagram of a method 300 for component management. For ease of description, the component management method 300 is described below with reference to monitoring the first engine component 24A across its operational life with multiple different aircraft engines 26. This component management method 300, however, may be extended to monitor one or more of the other engine components 24 in the group across their operational life as well. The component management method 300 may be further extended to monitor multiple different groups of engine components, where the engine components in the different groups are of different types (e.g., models) of engine components. Moreover, while the operational life of the first engine component 24A is described below with respect to being installed in multiple different aircraft engines 26, it is contemplated another one (or more) of the monitored engine components 24 may remain installed with the same aircraft engine 26 for its entire operational life.

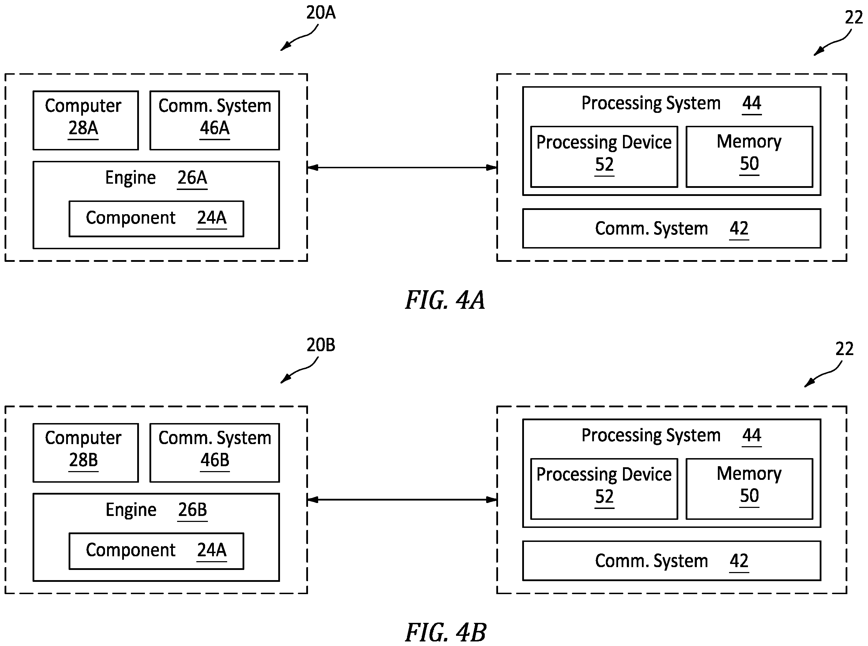

In step 302, referring to FIG. 4A, the component management system 22 receives an output signal from the first aircraft system 20A. Here, the first engine component 24A is installed in the first aircraft engine 26A of the first aircraft system 20A. The output signal communicates identification data for the first aircraft engine 26A as well as an operating parameter (or multiple operating parameters) for the first aircraft engine 26A to the component management system 22. The identification data may be indicative of the model of the first aircraft engine 26A, an identification number (e.g., a serial number) of the first aircraft engine 26A, and/or any other information which may be processed by the component management system 22 to determine an identity and/or a type of the first aircraft engine 26A. Examples of the engine operating parameter include: a total operating time (e.g., total number of engine hours) on the first aircraft engine 26A; a total flight time (e.g., total number of flight hours) on the first aircraft engine 26A; and total operating cycles (e.g., total number of engine startups) on the first aircraft engine 26A.

In step 304, the component management system 22 determines a (e.g., corrected) first component parameter for the first engine component 24A based on the identification data and the engine operating parameter. For example, the engine operating parameter obtained during the step 302 may be compared to an engine operating parameter for when the first engine component 24A was initially installed in the first aircraft engine 26A. Where the first engine component 24A was installed in the first aircraft engine 26A during its initial assembly, the engine operating parameter obtained during the step 302 provides an uncorrected first component parameter for the first engine component 24A - first information on the first engine component 24A. For example, the number of component hours, flight hours and/or engine startups on the first engine component 24A (while installed with the first aircraft engine 26A) is equal to the number of engine hours, flight hours and/or engine startups on the first aircraft engine 26A. However, where the first engine component 24A was installed in the first aircraft engine 26A after its initial assembly, the uncorrected first component parameter for the first engine component 24A may be determined by subtracting the engine operating parameter for when the first engine component 24A was initially installed in the first aircraft engine 26A from the engine operating parameter obtained during the step 302. For example, the number of component hours, flight hours and/or engine startups on the first engine component 24A (while installed with the first aircraft engine 26A) is equal to number of engine hours, flight hours and/or engine startups recorded at the step 302 minus the number of engine hours, flight hours and/or engine startups recorded when the first engine component 24A was initially installed in the first aircraft engine 26A.

The component management system 22 may determine a correction factor (e.g., a normalization factor) to apply to the uncorrected first component parameter for the first engine component 24A based on the identification data. A high output power aircraft engine, for example, may subject an engine component 24 to more wear than an engine component 24 in a low output power engine. Therefore, while the engine component 24 in the high output power aircraft engine and the engine component 24 in the low output power engine may have the same number of component hours, flight hours and/or engine startups, a remaining useful life of the engine component 24 in the high output power aircraft engine may be less than a remaining useful life of the engine component 24 in the low output power engine. The correction factor may therefore be tailored to correct (e.g., normalize) the number of component hours, flight hours and/or engine startups on the engine component 24 of the high output power aircraft engine to be equivalent to the number of component hours, flight hours and/or engine startups if that same engine component 24 was operated in the low output power aircraft engine. Here, the first aircraft engine 26A is a first model of aircraft engine and is associated with a first correction factor.

The uncorrected first component parameter for the first engine component 24A is processed using the first correction factor to determine the first component parameter for the first engine component 24A. The uncorrected first component parameter for the first engine component 24A, for example, may be multiplied by the first correction factor to determine the first component parameter for the first engine component 24A. The uncorrected first component parameter for the first engine component 24A may thereby be corrected based on the identity of the first aircraft engine 26A to provide the first component parameter for the first engine component 24A. Examples of the (e.g., corrected) first component parameter include: a corrected total operating time (e.g., total number of component hours) on the first engine component 24A while installed in the first aircraft engine 26A; a corrected total flight time (e.g., total number of flight hours) on the first engine component 24A while installed in the first aircraft engine 26A; and corrected total operating cycles (e.g., total number of engine startups) on the first engine component 24A while installed in the first aircraft engine 26A.

In step 306, a record for the first engine component 24A is updated in the component management system 22. For example, where the first engine component 24A was brand new when installed in the first aircraft engine 26A, the corrected number of component hours, flight hours and/or engine startups on the first engine component 24A may be recorded in the memory 50 as the total number of component hours, flight hours and/or engine startups on the first engine component 24A. However, where the first engine component 24A was already used when installed in the first aircraft engine 26A, the total number of component hours, flight hours and/or engine startups on the first engine component 24A recorded in the memory 50 may be updated to be equal to the corrected number of component hours, flight hours and/or engine startups on the first engine component 24A plus the previous number of corrected number of component hours, flight hours and/or engine startups on the first engine component 24A (e.g., previously recorded in the memory 50).

In step 308, referring to FIG. 4B, the component management system 22 receives an output signal from the second aircraft system 20B. Here, the first engine component 24A is now installed in the second aircraft engine 26B of the second aircraft system 20B. For example, following the step 302, the first engine component 24A may have been removed from the first aircraft engine 26A and then installed into the first aircraft engine 26B. The output signal communicates identification data for the second aircraft engine 26B as well as an operating parameter (or multiple operating parameters) for the second aircraft engine 26B to the component management system 22. The identification data may be indicative of the model of the second aircraft engine 26B, an identification number (e.g., a serial number) of the second aircraft engine 26B, and/or any other information which may be processed by the component management system 22 to determine an identity and/or a type of the second aircraft engine 26B. Examples of the engine operating parameter include: a total operating time (e.g., total number of engine hours) on the second aircraft engine 26B; a total flight time (e.g., total number of flight hours) on the second aircraft engine 26B; and total operating cycles (e.g., total number of engine startups) on the second aircraft engine 26B.

In step 310, the component management system 22 determines a (e.g., corrected) second component parameter for the first engine component 24A based on the identification data and the engine operating parameter. For example, the engine operating parameter obtained during the step 308 may be compared to an engine operating parameter for when the first engine component 24A was initially installed in the second aircraft engine 26B. Where the first engine component 24A was installed in the second aircraft engine 26B during its initial assembly, the engine operating parameter obtained during the step 308 provides an uncorrected second component parameter for the first engine component 24A - second information on the first engine component 24A. For example, the number of component hours, flight hours and/or engine startups on the first engine component 24A (while installed with the second aircraft engine 26B) is equal to the number of engine hours, flight hours and/or engine startups on the second aircraft engine 26B. However, where the first engine component 24A was installed in the second aircraft engine 26B after its initial assembly, the uncorrected second component parameter for the first engine component 24A may be determined by subtracting the engine operating parameter for when the first engine component 24A was initially installed in the second aircraft engine 26B from the engine operating parameter obtained during the step 308. For example, the number of component hours, flight hours and/or engine startups on the first engine component 24A (while installed with the second aircraft engine 26B) is equal to number of engine hours, flight hours and/or engine startups recorded at the step 308 minus the number of engine hours, flight hours and/or engine startups recorded when the first engine component 24A was initially installed in the second aircraft engine 26B.

The component management system 22 may determine a correction factor (e.g., a normalization factor) to apply to the uncorrected second component parameter for the first engine component 24A based on the identification data. Here, the second aircraft engine 26B is a second model of aircraft engine and is associated with a second correction factor. The second model of aircraft engine is different than the first model of aircraft engine. The second correction factor is also different (e.g., greater or less) than the first correction factor. Of course, it is contemplated the correction factor for one of the aircraft engines 26 may be one (1x).

The uncorrected second component parameter for the first engine component 24A is processed using the second correction factor to determine the second component parameter for the first engine component 24A. The uncorrected second component parameter for the first engine component 24A, for example, may be multiplied by the second correction factor to determine the second component parameter for the first engine component 24A. The uncorrected second component parameter for the first engine component 24A may thereby be corrected based on the identity of the second aircraft engine 26B to provide the second component parameter for the first engine component 24A. Examples of the (e.g., corrected) second component parameter include: a corrected total operating time (e.g., total number of component hours) on the first engine component 24A while installed in the second aircraft engine 26B; a corrected total flight time (e.g., total number of flight hours) on the first engine component 24A while installed in the second aircraft engine 26B; and corrected total operating cycles (e.g., total number of engine startups) on the first engine component 24A while installed in the second aircraft engine 26B.

In step 312, the record for the first engine component 24A is updated in the component management system 22. For example, the total number of component hours, flight hours and/or engine startups on the first engine component 24A recorded in the memory 50 may be updated to be equal to the corrected number of component hours, flight hours and/or engine startups on the first engine component 24A obtained in step 310 plus the previous number of corrected number of component hours, flight hours and/or engine startups on the first engine component 24A (e.g., previously recorded in the memory 50 during, for example, the step 306). Using this methodology, repair technicians and other personnel may plan for inspection, refurbishing, replacement and/or another service of the second aircraft engine 26B and/or the first engine component 24A when it has reached (or is approaching) an end of its useful service life. Moreover, since the component parameter recorded in the memory 50 accounts for differences in aircraft engine models, safety factors for the servicing of the first engine component 24A may be reduced.

In some embodiments, the correction factor may be determined (e.g., solely) based on the identity of the aircraft engine 26. In other embodiments, the correction factor may also be determined based on one or more other engine operating parameters. Examples of these other engine operating parameters include, but are not limited to, a temperature, a pressure and/or a flowrate of a fluid (e.g., core air, fuel, etc.) within the respective aircraft engine 26, a power command to the respective aircraft engine 26, etc. For example, where the aircraft engine 26 is operated at or about max power for a relatively long period of time, this may also be accounted for by the correction factor. In another example, where the aircraft engine 26 is operated at high operating temperatures for a relatively long period of time, this may also be accounted for by the correction factor.

In some embodiments, the monitored operational parameters are the same across the various different aircraft engines 26. In other embodiments, however, it is contemplated the monitored operational parameters may be varied between different aircraft engines 26.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method for component management, comprising:
receiving a first output signal from a first aircraft system (20A) at a component management system (22), the first aircraft system (20A) including a first engine (26A) and a first component (24A) installed in the first engine (26A), and the first output signal communicating identification data for the first engine (26A) and a first operating parameter for the first engine (26A);
determining a first component parameter for the first component (24A) based on the identification data for the first engine (26A) and the first operating parameter for the first engine (26A); and
updating a record for the first component (24A) in the component management system (22) using the first component parameter for the first component (24A).

2. The method of claim 1, wherein the component management system (22) comprises a cloud-based server, and/or wherein the first component is a fuel nozzle.

3. The method of claim 1 or 2, wherein the identification data for the first engine (26A) is indicative of a model of the first engine (26A).

4. The method of any preceding claim, wherein the identification data for the first engine (26A) is indicative of an identification number of the first engine (26A).

5. The method of any preceding claim, wherein:
the first operating parameter for the first engine (26A) is indicative of a period of time of operation of the first engine (26A); and
the first component parameter for the first component (24A) is indicative of a period of time of operation of the first component (24A) corrected based on the identification data for the first engine (26A).

6. The method of any preceding claim, wherein:
the first operating parameter for the first engine (26A) is indicative of a number of operating cycles of the first engine (26A); and
the first component parameter for the first component (24A) is indicative of a number of operating cycles of the first component (24A) corrected based on the identification data for the first engine (26A).

7. The method of any preceding claim, further comprising:
determining a first correction factor based on the identification data for the first engine (26A);
wherein the determining of the first component parameter for the first component (24A) comprises modifying an uncorrected first component parameter, obtained using the first operating parameter for the first engine (26A), based on the first correction factor to provide the first component parameter for the first component (24A).

8. The method of any preceding claim, further comprising:
receiving a second output signal from a second aircraft system (20B) at the component management system (22), the second aircraft system (20B) including a second engine (26B) and the first component (24A) where the first component (24A) was removed from the first engine (26A) following the receiving of the first output signal and installed in the second engine (26B), and the second output signal communicating identification data for the second engine (26B) and a second operating parameter for the second engine (26B);
determining a second correction factor based on the identification data for the second engine (26B);
modifying an uncorrected second component parameter, obtained using the second operating parameter for the second engine (26B), based on the second correction factor to provide a second component parameter for the first component (24A); and
updating the record for the first component (24A) in the component management system (22) using the second component parameter for the first component.

9. The method of claim 8, wherein the record for the first component in the component management system accounts for operation of the first component in the first engine and the second engine.

10. The method of any preceding claim, further comprising:
receiving a or the second output signal from a or the second aircraft system (20B) at the component management system (22), the second aircraft system (20B) including a or the second engine (26B) and a or the second component installed in the second engine (26B), and the second output signal communicating identification data for the second engine (26B) and a or the second operating parameter for the second engine (26B);
determining a second component parameter for the second component based on the identification data for the second engine (26B) and the second operating parameter for the second engine (26B); and
updating a record for the second component in the component management system (22) using the second component parameter for the second component.

11. The method of any of claims 8 to 10, further comprising:
determining a or the first correction factor based on the identification data for the first engine (26A), wherein the determining of the first component parameter for the first component (24A) comprises processing the first operating parameter for the first engine (26A) and the first correction factor to provide the first component parameter for the first component (24A); and
determining a second correction factor based on the identification data for the second engine (26B), wherein the determining of the second component parameter for the second component comprises processing the second operating parameter for the second engine (26B) and the second correction factor to provide the second component parameter for the second component.

12. The method of any of claims 8 to 11, wherein:
the second engine (26B) is a different model of engine than the first engine (26A) and the second correction factor is different than the first correction factor; or
the first component (24A) and the second component are a common model of component.

13. A method for component management, comprising:
receiving a first output signal from a propulsion system of an aircraft at a component management system (22) located remote from the aircraft, the first aircraft system (20A) including a first engine (26A) and a first component (24A), and the first output signal indicative of a first operating parameter for the first engine (26A);
determining a first correction factor based on an identity of the first engine (26A);
modifying information, determined using the first operating parameter for the first engine (26A), based on the first correction factor to provide a first component parameter for the first component (24A); and
updating a history of the first component (24A) in the component management system (22) based on the first component parameter for the first component (24A).

14. A method for component management, comprising:
determining a first component parameter for a first component (24A) installed in a first aircraft engine (26A);
updating a record for the first component (24A) in a component management system (22) using the first component parameter for the first component (24A);
determining a second component parameter for the first component (24A) installed in a second aircraft engine (26B), wherein the first component (24A) was removed from the first engine (26A) following the determination of the first component parameter and subsequently installed in the second engine (26B), wherein the second aircraft engine (26B) has a different configuration than the first aircraft engine (26A), and wherein the second component parameter and the first component parameter are of a common parameter type; and
updating the record for the first component (24A) in the component management system (22) using the second component parameter for the first component (24A), optionally wherein:
the first component parameter for the first component (24A) is determined using a first correction factor; and
the second component parameter for the first component (24A) is determined using a second correction factor that is different than the first correction factor.

15. The method of claim 14, wherein:
the second aircraft engine (26B) is a different type of gas turbine engine than the first aircraft engine (26A); and/or
the component management system (22) comprises a cloud-based server located remote from the first aircraft engine (26A) and the second aircraft engine (26B).
